# EUROPEAN PATENT APPLICATION

(11) **EP 2 487 978 A1**
(43) Date of publication of application: **15.08.2012**
(21) Application number: 10821863.7
(22) Date of filing: 22.09.2010
(51) Int. Cl.: H04W 72/12, H04J 1/00, H04J 11/00, H04W 24/10, H04W 72/04

(54) **WIRELESS COMMUNICATION CONTROL METHOD, MOBILE TERMINAL DEVICE AND BASE STATION DEVICE**

(30) Priority: 05.10.2009 JP 2009231936
(71) Applicant: NTT DOCOMO, INC., Chiyoda-ku Tokyo 100-6150 (JP)
(72) Inventor: MIKI, Nobuhiko, Tokyo 100-6150 (JP)
(74) Representative: HOFFMANN EITLE
(86) International application number: PCT/JP2010/066417
(87) International publication number: WO 2011/043192

(57) **Abstract**

The present invention allows an error of the number of symbols of a downlink control channel reported on the downlink to be detected in a base station apparatus. A radio communication control method is provided, which includes: receiving the number of symbols of a downlink control channel, a signal of the downlink control channel, and a signal of a downlink data channel, which are transmitted from a base station apparatus in subframe units; generating transmission acknowledgement information which represents the absence or presence of a reception error when the signal of the downlink data channel is decoded based on the signal of the downlink control channel; applying processing which allows information related to the received number of symbols of the downlink control channel to be detected from the transmission acknowledgement information in the base station apparatus; and transmitting the processed transmission acknowledgement information.

## Description

### Technical Field

The present invention relates to a radio communication system which adopts orthogonal frequency division multiplexing access (OFDMA) on the downlink. More particularly, the present invention relates to a radio communication control method, a mobile terminal apparatus and a base station apparatus that make it possible to detect errors of the number of symbols of a downlink control channel.

### Background Art

The communication scheme subsequent to W-CDMA and HSDPA, that is, long-term revolution (LTE), has been set forth by 3GPP, which is the standards organization of W-CDMA, and, for radio access schemes, OFDMA has been employed on the downlink and SC-FDMA (Single-Carrier Frequency Division Multiple Access) has been employed on the uplink.

OFDM is a scheme to perform transmission by dividing a frequency band into a plurality of narrow frequency bands (subcarriers) and placing data on each frequency band, and, by arranging subcarriers on frequencies densely so as to partly overlap each other and not to interfere with each other, it is possible to realize high-speed transmission and improve the efficiency of use of frequencies.

SC-FDMA is a transmission scheme that can reduce interference between terminals by dividing a frequency band and performing transmission using different frequency bands between a plurality of terminals. SC-FDMA has a characteristic of reducing the variation of transmission power, the characteristic allows low power consumption of terminals and wide coverage.

LTE is a system in which communication is performed by sharing one or two or more physical channels between a plurality of mobile stations (UE: User Equipment) on both the uplink and the downlink. The above channels shared by a plurality of mobile stations UE are generally referred to as "shared channels, " and, in LTE, these include the PUSCH (Physical Uplink Shared Channel) for the uplink and the PDSCH (Physical Downlink Shared Channel) for the downlink.

Then, in a communication system using the above-described shared channels, it is necessary to signal, per subframe which is a transmission time unit, to which mobile stations UE the above shared channels are assigned. A subframe may be referred to as a "transmission time interval" (TTI).

In LTE, the PDCCH (Physical Downlink Control Channel) is set forth as a downlink control channel to be used for the above signaling, and, furthermore, the PCFICH (Physical Control Format Indicator Channel) is set forth as a control channel to report the number of OFDM symbols used for the PDCCH, and the PHICH (Physical Hybrid-ARQ Indicator Channel) is set forth as a control channel to transmit hybrid ARQ ACK or NACK information for the PUSCH.

Downlink control information that is transmitted by the PDCCH includes, for example, downlink scheduling information, UL scheduling grant, overload indicator and transmission power control command bit (non-patent literature 1). Also, the above downlink scheduling information includes, for example, downlink resource block assignment information, UE IDs, the number of streams, information related to precoding vectors, data size, modulation scheme, and information related to HARQ (Hybrid Automatic Repeat reQuest). Furthermore, the above uplink scheduling grant includes, for example, uplink resource block assignment information, UE IDs, data size, modulation scheme, uplink transmission power information, and demodulation reference signal information.

The above PCFICH is information to report the PDCCH format. To be more specific, by means of this PCFICH, the number of OFDM symbols to which the PDCCH is mapped, is reported. In LTE, the number of OFDM symbols to which the PDCCH is mapped is one of 1, 2 and 3, and, in one subframe, the PDCCH is mapped from the top OFDM symbol (non-patent literature 2).

On the downlink, a range corresponding to the number of OFDM symbols reported by the PCFICH from the beginning of a subframe, serves as a control channel field assigned to the PDCCH. A mobile station decodes the control channel field, and, if there is information addressed to that mobile station, further specifies and decodes the radio resources allocated to the PDSCH, based on downlink control information.

### Citation List

### Non-Patent Literature

Non-Patent Literature 1: R1-070103, Downlink L1/L2 Control Signaling Channel Structure: Coding
Non-Patent Literature 2: 3GPP TS 36.211 (V0.2.1), "Physical Channels and Modulation," November 2006

### Summary of Invention

### Technical Problem

However, depending on the quality of radio resources allocated to the control channel field, a PCFICH error might occur. When there is an error with control channel field assignment information reported by the PCFICH, the PDSCH cannot be decoded correctly. Furthermore, because the PDSCH employs packet combining to save information about an error packet and perform combining when a retransmission packet is received, performing combining using a wrong PDSCH does not lead to improved characteristics.

In view of the above, it is therefore an object of the present invention to provide a radio communication control method, a mobile terminal apparatus and a base station apparatus that make it possible to detect, in a base station apparatus, an error of the number of downlink control channel symbols reported on the downlink.

### Solution to Problem

The first aspect of the present invention has: a reception section configured to receive the number of symbols of a downlink control channel, a signal of the downlink control channel, and a signal of a downlink data channel, which are transmitted from a base station apparatus in predetermined time units; a transmission acknowledgement section configured to generate transmission acknowledgement information which represents the absence or presence of a reception error when the signal of the downlink data channel is decoded based on the signal of the downlink control channel; a processing section configured to apply, to the transmission acknowledgement information, processing which allows information related to the number of symbols of the downlink control channel received in the reception section to be detected from the transmission acknowledgement information in the base station apparatus; and a transmission section configured to transmit the transmission acknowledgement information processed by the processing section.

Also, a second aspect of the present invention has: a transmission section configured to transmit the number of symbols of a downlink control channel, a signal of the downlink control channel, and a signal of a downlink data channel, in predetermined time units; a reception section configured to receive transmission acknowledgement information which represents the absence or presence of a reception error, transmitted from a mobile terminal apparatus having received the signal of the downlink data channel based on the signal of the downlink control channel ; and an error determining section configured to determine the absence or presence of an error with respect to the number of symbols of the downlink control channel received in the mobile terminal apparatus, from processing applied to the transmission acknowledgement information received in the reception section.

According to the present invention, it is possible to detect whether or not the number of downlink control channel symbols is reported to a mobile terminal apparatus without error, in a base station apparatus that receives transmission acknowledgement information from the mobile terminal apparatus.

### Advantageous Effects of Invention

The present invention can provide a radio communication control method, a mobile terminal apparatus and a base station apparatus that make it possible to detect, in a base station apparatus, an error of the number of downlink control channel symbols reported on the downlink.

### Brief Description of Drawings

FIG. 1 provides conceptual diagrams for explaining the mechanism of detecting PCFICH errors;
FIG. 2 provides drawings for explaining UL ACK/NACK shift methods;
FIG. 3 is an overview of a mobile communication system according to an embodiment;
FIG. 4 is a schematic configuration diagram of a base station according to an embodiment;
FIG. 5 is a functional block diagram of a baseband signal processing section provided in a base station according to an embodiment;
FIG. 6 is a functional block diagram of a transmission processing section in a baseband signal processing section of a base station according to an embodiment;
FIG. 7 is a schematic configuration diagram of a mobile station according to an embodiment;
FIG. 8 is a functional block diagram of a baseband signal processing section provided in a mobile station according to an embodiment;
FIG. 9 is a processing sequence related to PCFICH error detection;
FIG. 10 is a conceptual diagram illustrating the processing until CFI values are assigned to subframes;
FIG. 11 is a drawing illustrating the step of DCI coding set forth by LTE;
FIG. 12 is a drawing illustrating the step of mapping encoded DCIs;
FIG. 13 is a diagram illustrating the layered bandwidth configuration set forth by LTE-A;
FIG. 14 provides conceptual diagrams illustrating methods of transmitting a downlink control channel;
FIG. 15 is a drawing illustrating a method of multiplexing (cyclic shift multiplexing) PUCCH between users; and
FIG. 16 is a drawing illustrating a method of multiplexing (block spreading multiplexing) PUCCH between users.

### Description of Embodiments

The present invention is designed to report the number of downlink control channel symbols from base station eNB to mobile station UE, decode downlink user data based on a downlink control channel signal, and transmit, from mobile station UE to base station eNB, transmission acknowledgement information (ACK/NACK information) which shows the absence or presence of errors when decoding downlink user data, so that the base station eNB can detect whether or not the number of symbols of downlink control channel has been reported to mobile station UE without error by using this ACK/NACK information transmitted on the uplink.

According to an aspect of the present invention, resources that are allocated to HARQ ACK/NACK information (hereinafter referred to as "UL ACK/NACK"), which is transmitted by an uplink PUCCH, are shifted according to the number of symbols of a PCFICH received in mobile station UE. From the ACK/NACK resource shift received in base station eNB, it is decided whether or not the PCFICH received in mobile station UE has errors.

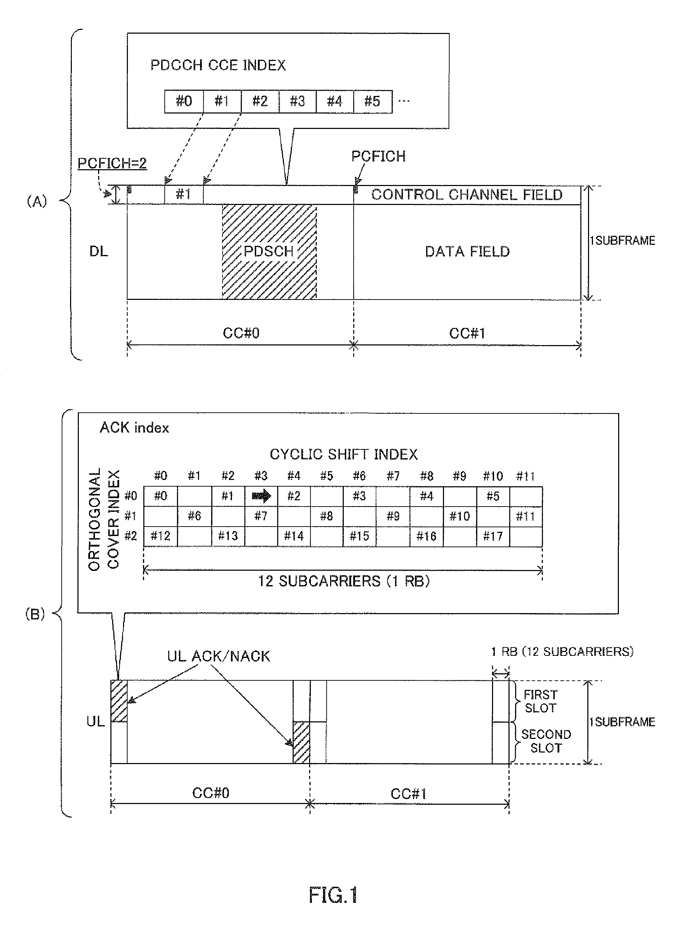

The mechanism of detecting PCFICH. errors by shifting UL ACK/NACK resources will be described below in detail. FIG. 1(A) illustrates a downlink physical channel structure, and FIG. 1(B) illustrates an uplink physical channel structure.

As illustrated in FIG. 1(A), in a downlink physical channel, a control channel field is arranged in a range of several OFDM symbols from the beginning of a subframe, and a data field is arranged in the rest of the subframe. A PDCCH, which is a downlink control channel, is assigned to the control channel field. To the PDCCH, radio resources are allocated in CCE (Control Channel Element) units which are signal transmission blocks. One CCE is formed with nine REGs (Resource Element Groups), and one REG is formed with four subcarriers. An individual CCE can be represented by an index (CCE index). CCEs are sorted such that the same CCE index does not overlap between a plurality of users multiplexed in the same subframe. Downlink control information transmitted by the PDCCH includes PDSCH resource allocation information.

As illustrated in FIG. 1(B), in an uplink physical channel, the radio resources at both ends of the fundamental frequency block (one component carrier) in each subframe are allocated to an uplink control channel (PUCCH). In order to achieve frequency diversity gain, inter-subframe frequency hopping is applied to each PUCCH. The PUCCH transmits HARQ ACK/NACK information for the downlink PDSCH.

In LTE, resource units that are allocated to the PUCCH can be represented by indices. In particular, as for UL ACK/NACK, the CCE index of the minimum number among the CCEs used for downlink PDCCH transmission, is used as an ACK index. As illustrated in FIG. 1(A), in association with CCE index #1 of the minimum number among the CCEs used for PDCCH transmission, the resource allocated to ACK index #1 of the same index number is used to transmit UL ACK/NACK. When four CCEs from CCE index #5 to CCE index #8 are assigned for PDCCH transmission, CCE index #4 is the CCE index of the minimum number.

With the present invention, the ACK index corresponding to the CCE index of the minimum number among the CCEs used for PDCCH transmission is used as a reference index, and UL ACK/NACK is transmitted using the resource to which an ACK index shifted from that reference index (including the case where the amount of shift=0) is assigned. The amount of ACK index (resource) shift corresponds to the number of PCFICH symbols.

In the uplink PUCCH, as illustrated in FIG. 1(B), UL ACK/NACK resources that can be allocated in one subframe are provided as ACK indices. In LTE, in the examples illustrated in FIGs . 1(A) and (B), the CCE index of the minimum number among the CCEs used for PDCCH transmission is #1, so that ACK index #1 is assigned to UL ACK/NACK.

With the present invention, as a requirement to determine the ACK index, not only the CCE index of the minimum number among the CCEs used for PDCCH transmission, but also the number of OFDM symbols reported by the PCFICH is added. To be more specific, according to the number of symbols reported by the PCFICH, the ACK index is shifted. In the examples illustrated in FIGs. 1(A) and (B), the CCE index of the minimum number is #1 and the number of symbols reported by the PCFICH is two, so that UL ACK/NACK is transmitted by ACK index=#2, which is a one-index shifted from ACK index=#1.

In base station eNB, CCE indices to use for PDCCH transmission are determined and the number of downlink control channel symbols to report by the PCFICH is determined on a per user basis, so that it is possible to learn the CCE index of the minimum number among the CCEs used for PDCCH transmission and the number of OFDM symbols reported by the PCFICH.

Consequently, it is possible to check whether or not a UL ACK/NACK resource (ACK index) received from a user by the PUCCH is the resource shifted by a number of indices corresponding to the number of symbols reported by the PCFICH, from the CCE index of the minimum number of the PDCCH transmitted to the user.

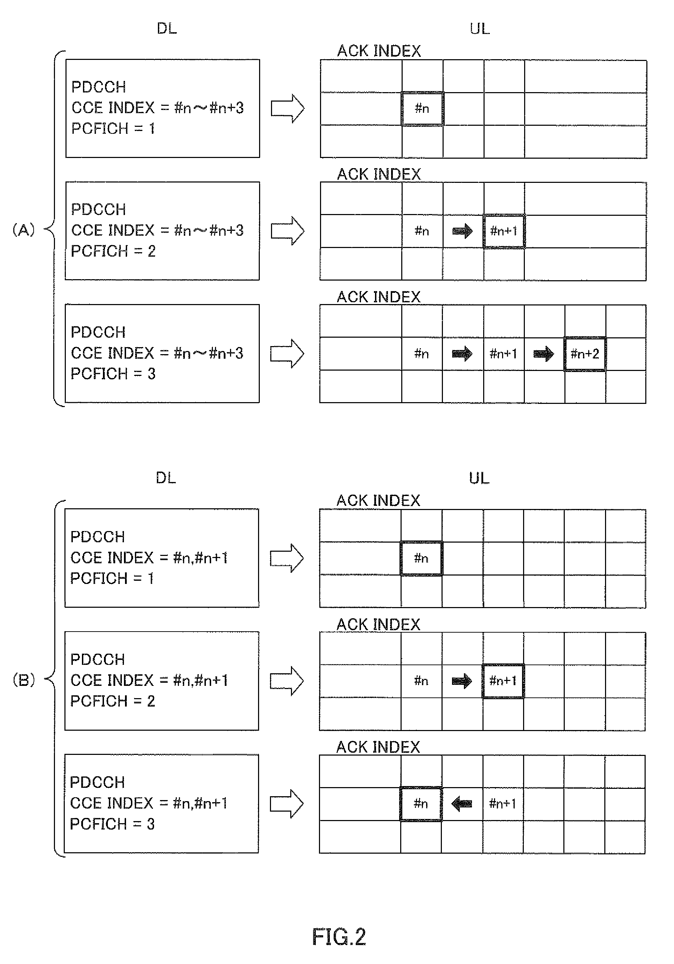

FIGs. 2 (A) and (B) are drawings for explaining UL ACK/NACK shift methods. FIG. 2(A) illustrates a simple shift method of changing the amount of ACK index shift according to the number of OFDM symbols reported by the PCFICH. This shift method is preferable when the number of CCEs to use for PDCCH transmission in one subframe is four or eight. FIG. 2(A) illustrates a case where the number of CCEs assigned for the PDCCH is four (CCE #n, CCE #n+1, CCE #n+2, and CCE #n+3). The CCE index of the minimum number is CCE #n.

When the number of OFDM symbols reported by the PCFICH is one (PCFICH=1), the resource corresponding to ACK index #n, which is the same index as CCE index #n of the minimum number, is used to transmit UL ACK/NACK. Here, although an index shift is not applied when PCFICH=1, it is equally possible to apply, an adequate ACK index shift for a case of PCFICH=1. When PCFICH=2, the resource corresponding to ACK index #n+1, which is a shift of one index from CCE index #n of the minimum number, is used to transmit UL ACK/NACK. When PCFICH=3, the resource corresponding to ACK index #n+2, which is a shift of two indices from CCE index #n of the minimum number, is used to transmit UL ACK/NACK.

When four CCEs (CCE #n, CCE #n+1, CCE #n+2 and CCE #n+3) or a greater number of CCEs (for example, eight) are allocated for PDCCH transmission, other users' ACK indices are not assigned to ACK index #n, ACK index #n+1, ACK index #n+2 and ACK index #n+3, which are the same indices as the CCE indices of the uplink PUCCH. That is to say, when an ACK index is shifted by a plurality of indices in the direction in which the index number increases, the problem of collision with other users' resources does not occur. More particularly, users located at cell edges are highly likely to be assigned four or a number of CCEs for PDCCH transmission in one subframe. Because users located at cell edges have a high likelihood of PCFICH errors, the shift method to associate PCFICH values (1, 2 and 3) and ACK index shift amounts on a one-by-one basis, is effective.

FIG. 2(B) illustrates a cyclic shift method of cyclically shifting an ACK index according to the CFI value reported by the PCFICH. This cyclic shift method is preferable when the number of CCEs used for PDCCH transmission in one subframe is two or greater. FIG. 2 (B) illustrates a case where the number of CCEs is two (CCE #n and CCE #n+1). The CCE index of the minimum number is CCE #n.

When PCFICH==1, the resource corresponding to ACK index #n, which is the same index as CCE index #n of the minimum number, is used to transmit UL ACK/NACK. When PCFICH=2, the resource corresponding to ACK index #n+1, which is a shift of one index to the right from CCE index #n of the minimum number, is used to transmit UL ACK/NACK. When PCFICH=3, a shift to return to CCE index #n of the minimum number, which is the reference index, is applied. That is to say, the resource corresponding to ACK index #n is used to transmit UL ACK/NACK.

In this way, a control is implemented such that a shift is applied up to the maximum value where the ACK index after the shift does not collide with other users' resources and returns the reference index (CCE index #n of the minimum number) when the maximum value is exceeded (cyclic shift). By this means, it can be prevented to collide with other users' resources when the number of CCEs used for PDCCH transmission is small.

Also, according to another aspect of the present invention, the modulation of UL ACK/NACK is changed depending on the CFI value of the PCFICH detected in mobile station UE. From the modulation of UL ACK/NACK received in base station eNB, it is judged whether or not there is an error with the PCFICH detected in mobile station UE.

For example, the amount of rotation when applying BPSK modulation or QPSK modulation to UL ACK/NACK information is changed according to the CFI value of the PCFICH (1, 2, or 3). Rotating UL ACK/NACK information can be interpreted as shifting an uplink reference signal.

In this way, by applying a method of changing the modulation of UL ACK/NACK, it is possible tell the number of PCFICH symbols to base station eNB by utilizing UL ACK/NACK, even when the number of CCEs used for PDCCH transmission is one.

Now, embodiments of the present invention will be described in detail with reference to the accompanying drawings. Here, a case of using a base station and mobile station supporting an LTE-A system will be described.

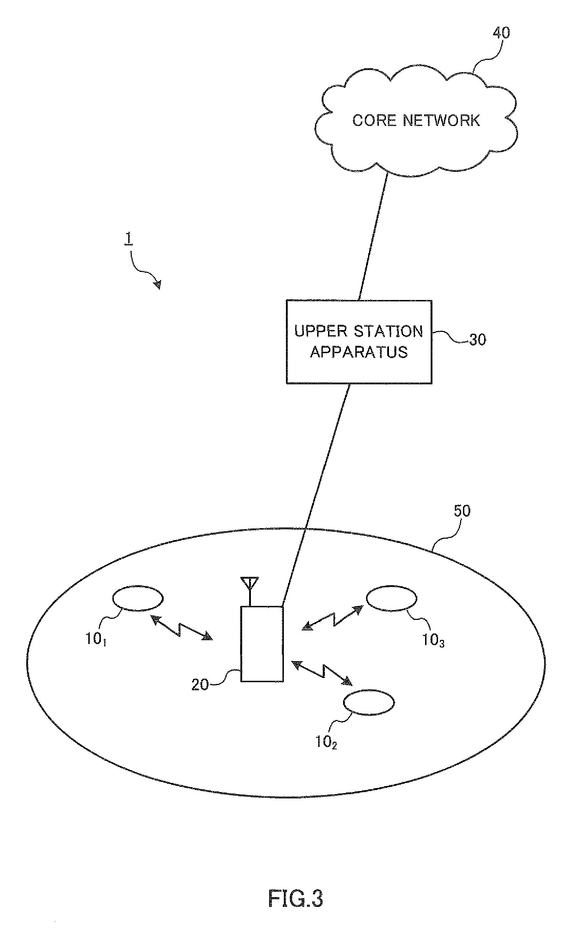

Referring to FIG. 3, a mobile communication system 1 having a mobile station (use) 10 and a base station (Node B) 20 according to an embodiment of the present invention will be described. FIG. 3 is a drawing for explaining the configuration of the mobile communication system 1 having the mobile station (UE) 10 and base station (Node B) 20, according to the present embodiment. The mobile communication system 1 illustrated in FIG. 3 is a system to incorporate, for example, an LTE system or SUPER 3G. Also, this mobile communication system 1 may be referred to as "IMT-Advanced" or "4G."

As illustrated in FIG. 3, the mobile communication system 1 is configured to include the base station 20 and a plurality of mobile stations 10 (10₁, 10₂, 10₃, ··· 10ₙ, where n is an integer to satisfy n>0) that communicate with this base station 20. The base station 20 is connected with an upper station apparatus 30, and this upper station apparatus 30 is connected with a core network 40. The mobile stations 10 communicate with the base station 20 in a cell 50. The upper station apparatus 30 includes, for example, an access gateway apparatus, radio network controller (RNC), mobility management entity (MME) and so on, but is by no means limited to these.

The mobile stations (10₁, 10₂, 10₃, ··· 10ₙ) have the same configuration, functions and state, so that, the following description will be given with respect to "mobile station 10," unless specified otherwise. Also, although the mobile station 10 performs radio communication with the base station 20 for ease of explanation, more generally, user apparatuses (User Equipment) including mobile stations and fixed terminal apparatuses may be used.

In the mobile communication system 1, as radio access schemes, OFDMA is applied to the downlink and SC-FDMA is applied to the uplink. OFDMA is a multi-carrier transmission scheme of performing communication by dividing a frequency band into a plurality of narrow frequency bands (subcarriers) and mapping data to each subcarrier. SC-FDMA is a single carrier transmission scheme of reducing interference between terminals by dividing a system band into bands formed with one or continuous resource blocks per terminal, and allowing a plurality of terminals to use mutually different bands.

Here, the communication channels in the LTE system will be described. On the downlink, a PDSCH that is used by each mobile station 10 on a shared basis, and downlink control channels (PDCCH, PCFICH and PHICH) are used. A downlink control channel may be referred to as a "downlink, L1/L2 control channel." By means of the PDSCH, user data (including upper layer control signals), that is, normal data signals, is transmitted. Transmission data is included in this user data. The fundamental frequency block (component carrier) and scheduling information assigned to the mobile station 10 in the base station 20 are reported to the mobile station 10 by a downlink control channel.

On the uplink, a PUSCH that is used by each mobile station 10 on a shared basis and a PUCCH which is an uplink control channel, are used. User data is transmitted by means of this PUSCH. Furthermore, by means of the PUCCH, UL ACK/NACK, downlink radio quality information (CQI: Channel Quality Indicator) and so on, are transmitted.

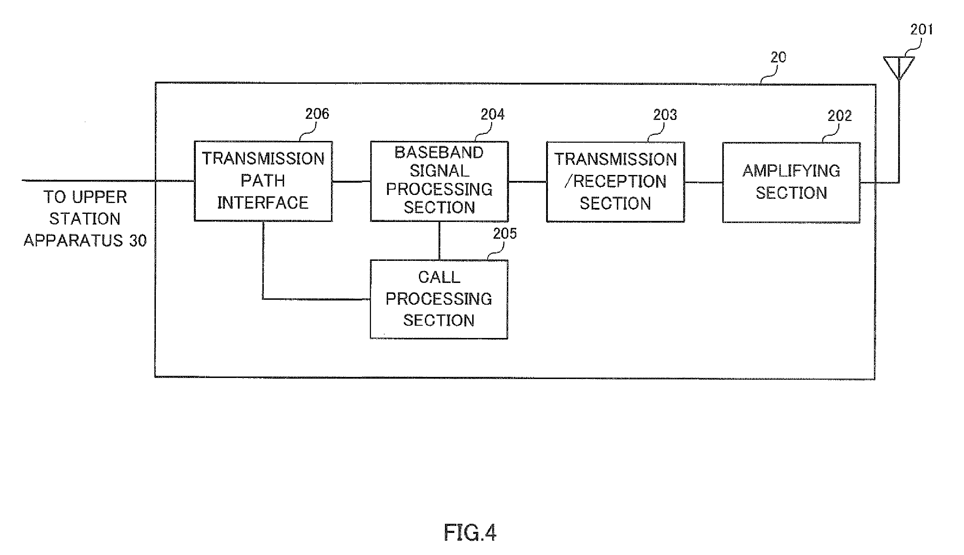

FIG. 4 is a schematic configuration diagram of the base station 20 according to the present embodiment. As illustrated in FIG. 4, the base station 20 has a transmission/reception antenna 201, an amplifying section 202, a transmission/reception section 203, a baseband signal processing section 204, a call processing section 205, and a transmission path interface 206.

User data that is transmitted on the downlink from the base station 20 to the mobile station 10 is input in the baseband signal processing section 204 through the transmission path interface 206, from the upper station apparatus 30 which is positioned above the base station 20

In the baseband signal processing section 204, PDCP layer processing such as assigning sequence numbers, division and coupling of user data, RLC (Radio Link Control) layer transmission processing such as RLC retransmission control transmission processing, and MAC (Medium Access Control) retransmission control, for example, HARQ transmission processing, scheduling, transport format selection, channel coding, inverse fast Fourier transform (IFFT) processing, andprecodingprocessing are performed, and the result is transferred to the transmission/reception section 203. Furthermore, as with signals of the physical downlink control channel, which is a downlink control channel, transmission processing such as channel coding and inverse fast Fourier transform are performed, and the result is transferred to the transmission/reception section 203.

The baseband signal processing section 204 reports control information for communication in the cell 50, to the mobile station 10, by a broadcast channel. Broadcast information for communication in the cell 50 includes, for example, the system bandwidth on the uplink and the downlink, identification information of a root sequence (root sequence index) for generating signals of random access preambles of the PRACH, and so on.

In the transmission/reception section 203, the baseband signal output from the baseband signal processing section 204 is converted into a radio frequency band through frequency conversion processing, and, after that, amplified in the amplifying section 202 and transmitted from the transmission/reception antenna 201.

Meanwhile, the base station 20 receives the transmission wave transmitted from the mobile station 10 in the transmission/reception antenna 201. The radio frequency signal received in the transmission/reception antenna 201 is amplified in the amplifying section 202, subjected to frequency conversion and converted into a baseband signal in the transmission/reception section 203, and input to the baseband signal processing section 204.

The baseband signal processing section 204 performs FFT processing IDFT processing, error correction decoding, MAC retransmission control reception processing, and RLC layer and PDCP layer reception processing of the user data included in the baseband signal that is received as input, and transfers the result to the upper station apparatus 30 through the transmission path interface 206.

The call processing section 205 performs call processing such as setting up and releasing a communication channel, manages the state of the base station 20 and manages the radio resources.

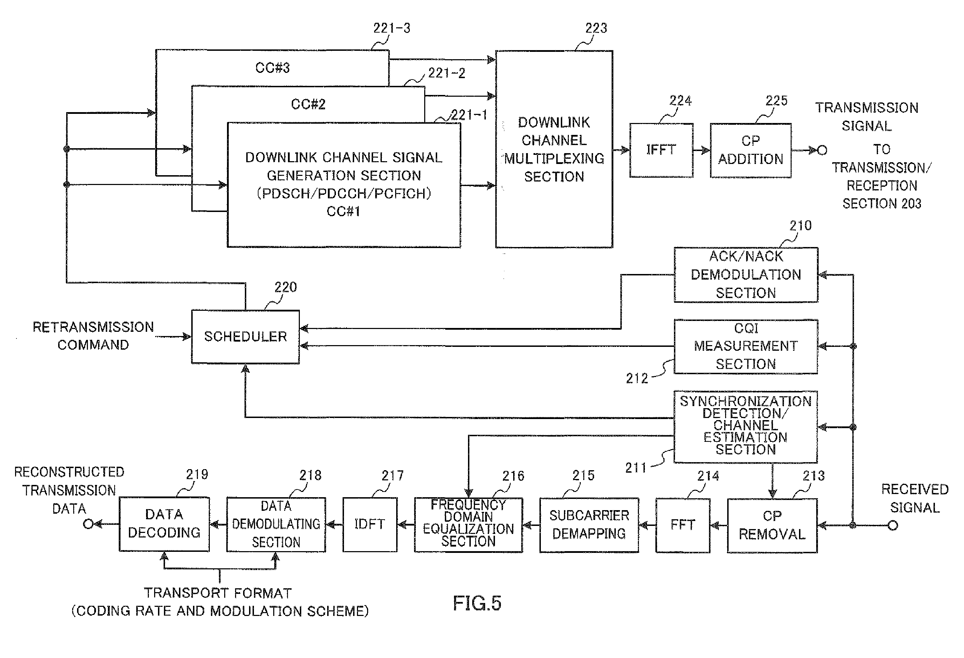

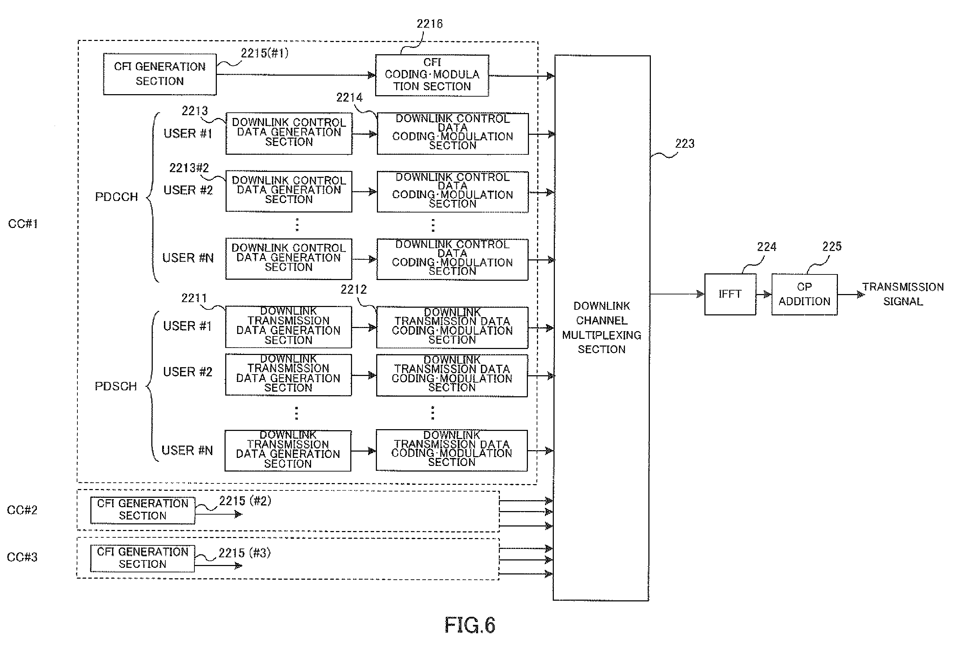

FIG. 5 is a functional block diagram illustrating the baseband signal processing section 204 provided in the base station 20 according to the present embodiment, and FIG. 6 illustrates the functional blocks of a transmission processing section in the baseband signal processing section 204 of the base station 20.

The ACK/NACK demodulation section 210 demodulates UL ACK/NACK transmitted by the PUCCH. By demodulating UL ACK/NACK, the resources (CAZAC code and block spreading code which are code resources to be described later, or modulation content) used to transmit the UL ACK/NACK are acquired. The acquired UL ACK/NACK resource information is reported to the scheduler 220, per user, in subframe units.

The reference signal included in a received signal is input in the synchronization detection/channel estimation section 211 and the CQI measurement section 212. The synchronization detection/channel estimation section 211 estimates the uplink channel state based on the reception condition of the reference signal received from the mobile station 10. The CQI measurement section 212 measures CQI, from the reference signal for quality measurement that is received from the mobile station 10.

Moreover, in the baseband signal processing section 204, after the cyclic prefix added to the received signal is removed by the CP removing section 213, the result is subjected to a Fourier transform in the fast Fourier transform section 214 and converted into frequency domain information. The received signal, converted in frequency domain information, is demapped in the frequency domain in the subcarrier demapping section 215. The subcarrier demapping section 215 performs demapping in a way to match the mapping in the mobile station 10. The frequency domain equalization section 216 equalizes the received signal based on the channel estimation value provided from the synchronization detection/channel estimation section 211. The inverse discrete Fourier transform section 217 performs an inverse discrete Fourier transform on the received signal and converts the frequency domain signal back to a time domain signal. Then, in the data demodulating section 218 and data decoding section 219, demodulation and decoding are performed based on the transport format (coding rate and modulation scheme), and transmission data is reconstructed.

Also, the channel estimation value estimated in the synchronization detection/channel estimation section 211 and the CQI of each resource block measured in the CQI measurement section 212 are input in the scheduler 220. The scheduler 220 schedules uplink/downlink control signals and uplink and downlink shared channel signals with reference to a retransmission command input from the upper station apparatus 30, channel estimation value and CQI. A propagation path in mobile communication varies differently per frequency, due to frequency selective fading. So, upon transmission of user data to a user terminal, adaptive frequency scheduling to assign resource blocks of good communication quality to each user terminal on a per subframe basis is used. In adaptive frequency scheduling, for each resource block, a user terminal of good propagation path quality is selected and assigned. Consequently, the scheduler 220 assigns resource blocks using the CQI of each resource block, fed back from each user terminal. Also, MCS (coding rate and modulation scheme) that satisfies a required block error rate with the assigned resource blocks is determined.

In downlink control signal scheduling, how many symbols from the beginning of OFDM symbol in each subframe are assigned to the downlink control channel is determined. The scheduler 220 determines an optimal number of OFDM symbols according to the cell radius and the number of users accommodated.

Furthermore, resources are allocated to the PDCCH, which is a downlink control channel, in CCE units. The scheduler 220 controls the number of CCEs to assign to users #1 to #N and controls the coding rate. For users requiring high coding rates, such as users located in cell edges, the number of CCEs to assign is made large. Also, for users requiring low coding rates, such as users in the cell center, the number of CCEs to assign is made small. CCEs assigned to the PDCCH can be represented by CCE indices (FIG. 1(A)).

The number of OFDM symbols subject to resource allocation to the downlink control channel in each subframe, and the CCE index of the minimum number among the CCEs assigned to the PDCCH in each subframe are managed on a per user basis, and are held until UL ACK/NACK for the PDSCH transmitted in the same subframe with the PDCCH is received.

Resource information, which is used to transmit UL ACK/NACK by each user, is reported from the ACK/NACK demodulation section 210 to the scheduler 220 in subframe units. Furthermore, transmission data and retransmission command are input from the upper station apparatus 30 that processes transmission signals.

The scheduler 220 holds the CCE index of the minimum number assigned to the PDCCH transmitted to the user in advance and the number of OFDM symbols reported by the PCFICH in the same subframe. Then, it is checked whether or not the UL ACK/NACK resource reported from the ACK/NACK demodulation section 210 matches the resource shifted, from the above CCE index of the minimum number of the PDCCH, by a number of indices corresponding to the number of symbols reported by the PCFICH. When the UL ACK/NACK resource has been applied a shift that matches the number of symbols reported by the PCFICH, it is judged that the PCFICH has been reported correctly, in the mobile station 10. Furthermore, when the UL ACK/NACK resource is not shifted in accordance with the number of symbols reported by the PCFICH, it is judged that an error has occurred with the PCFICH received in the mobile station 10. When an error occurs with the PCFICH. received in the mobile station 10, it is not possible to perform decoding correctly even by transmitting a retransmission packet in a regular way, and therefore a signal that makes the mobile station 10 discard a packet is transmitted. By transmitting a retransmission packet as a new packet, it is possible to make the mobile station 10 discard the packet it holds.

According to the present embodiment, the transmission processing system of the baseband signal processing section 204 is configured to be adaptable to three component carriers CC #1 to CC #3, has three downlink channel signal generation sections 221-1 to 221-3 in association with component carriers CC #1 to CC #3. The transmission processing system of the baseband signal processing section 204 is furthermore configured to be able to accommodate maximum N users (users #1 to #N). In FIG. 6, the PDSCH, PDCCH and PCFICH are illustrated as downlink channels related to the present invention, but other channels can be actually included as well.

The downlink transmission data generation section 2211 generates downlink shared channel signals using transmission data provided from the upper station apparatus 30. The transmission data generated in the downlink transmission data generation section 2211 is encoded and then modulated in the downlink transmission data coding·modulation section 2212. Information (MCS) about the coding method and modulation scheme for transmission data is given from the scheduler 220 to the downlink transmission data coding_{·}modulation section 2212. As for other users #2 to #N assigned to same component carrier CC #1, the downlink transmission data generation section 2211 and downlink transmission data coding · modulation section 2212 are provided likewise. Signals to be transmitted by the PDSCH are generated for each of component carriers CC #1 to CC #3.

The downlink control data generation section 2213 generates downlink control signals from the resource allocation information determined per user, MCS information, information for HARQ, PUCCH transmission power control command, and so on. Downlink control signals generated in the downlink control data generation section 2213 are encoded and then modulated in the downlink control data coding·modulation section 2214.

As for other users #2 to #N assigned to same component carrier CC #1, the downlink control data generation section 2213 and downlink control data coding · modulation section 2214 are provided likewise. Downlink control information to be reported by the PDCCH is generated for each of component carriers CC #1, to CC #3.

The CFI generation section 2215 generates a two-bit CFI value, which represents the number of symbols to assign, based on the number of OFDM symbols (control channel field) assigned to the downlink control channel determined by the scheduler 220. The CFI value generated in the CFI generation section 2215 is encoded and then modulated in the CFI coding·modulation section 2216. The CFI value generated in the CFI generation section 2215 serves as the number of OFDM symbols to be reported by the PCFICH.

The downlink channel multiplexing section 223 multiplexes the signals of each channel output from the coding modulation sections 2212, 2214 and 2216 for component carriers CC #1 to CC #3 (where time multiplexing, frequency multiplexing and code multiplexing may be used) .

A Downlink channel signal that is multiplexed in the downlink channel multiplexing section 223 is subjected to an inverse fast Fourier transform in the inverse fast Fourier transform section 224 and converted from a frequency domain signal into a time sequence signal, and then added a cyclic prefix in the cyclic prefix adding section (CP adding section) 225. Note that a cyclic prefix functions as a guard interval for cancelling the differences in multipath propagation delay. The transmission data, to which the cyclic prefix is added, is transmitted to the transmission/reception section 203.

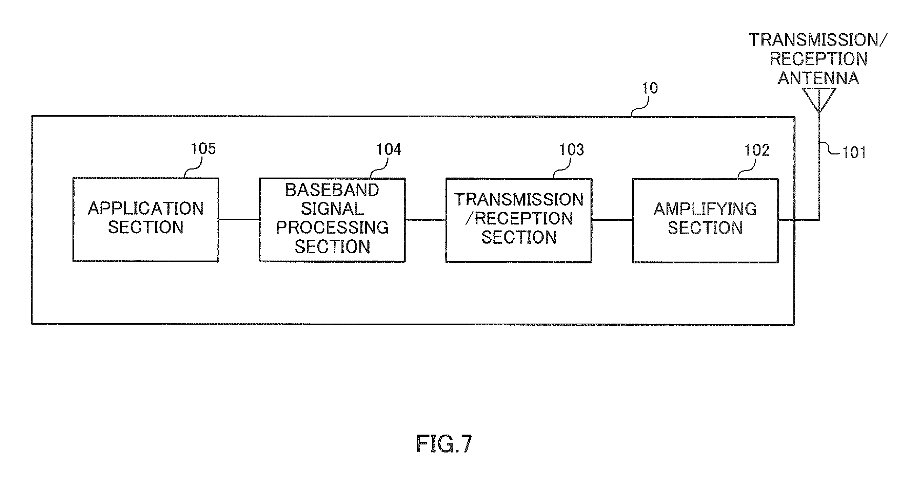

FIG. 7 is a schematic configuration diagram of the mobile station 10 according to the present embodiment. The mobile station 10 has a transmission/reception antenna 101, an amplifying section 102, a transmission/reception section 103, a baseband signal processing section 104, and an application section 105. When a signal is received, a radio frequency signal received in the transmission/reception antenna 101 is amplified in the amplifying section 102 and then converted into a baseband signal through frequency conversion in the transmission/reception section 103. This baseband signal is subjected to FFT processing, error correction decoding, retransmission control reception processing and so on in the baseband signal processing section 104. In this downlink data, downlink user data is transferred to the application section 105. The application section 105 performs processing related to upper layers above the physical layer and the MAC layer. Also, in the downlink data, broadcast information is also transferred to the application section 105. On the other hand, upon transmission, uplink user data is input from the application section 105 to the baseband signal processing section 104. In the baseband signal processing section 104, retransmission control (HARQ (Hybrid ARQ)) transmission processing, channel coding, DFT processing, IFFT processing and so on are performed, and the result is transferred to the transmission/reception section 103. The baseband signal output from the baseband signal processing section 104 is subjected to frequency conversion processing in the transmission/reception section 103 and converted into a radio frequency band, and, after that, amplified in the amplifying section 102 and transmitted from the transmission/reception antenna 101.

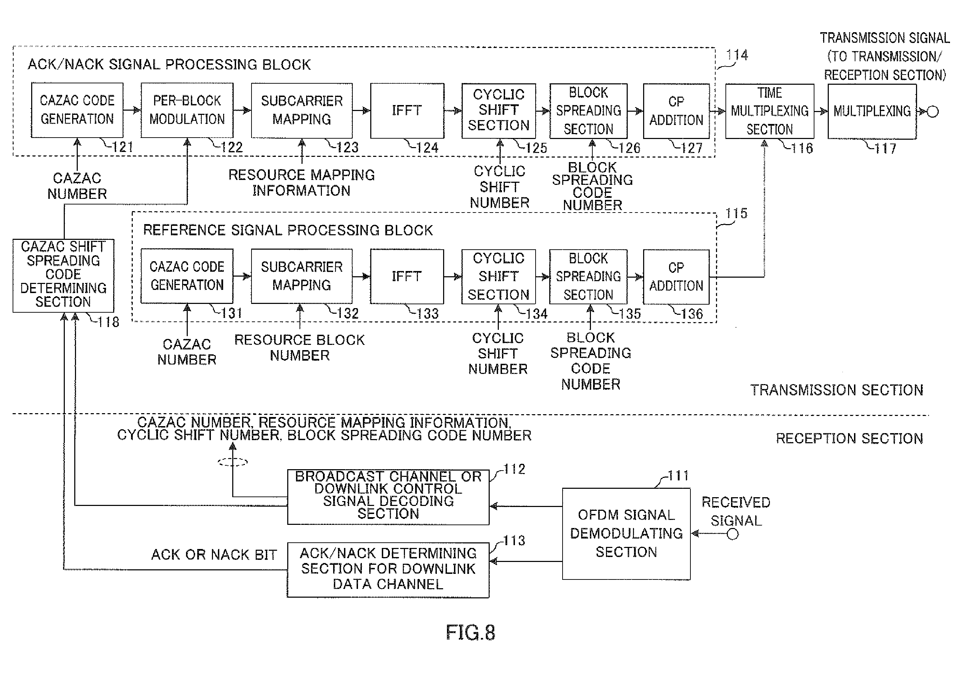

FIG. 8 is a functional block diagram of the baseband signal processing section 104 provided in the mobile station 10 according to the present embodiment, and mainly illustrates parts that are related to ACK/NACK transmission for the uplink data channel.

The reception section has an OFDM signal demodulation section 111 that demodulates a received OFDM signal, a broadcast channel/downlink control signal decoding section 112 that decodes the broadcast channel or downlink control signals, and an ACK/NACK determining section 113 that determines between ACK and NACK for the downlink data channel.

Furthermore, the transmission section has a processing block 114 for ACK/NACK signals, an uplink reference signal processing block 115, a time multiplexing section 116 that time-multiplexes UL ACK/NACK and uplink reference signals, a multiplexing section 117 that multiplexes other uplink channels, and a CAZAC shift spreading code determining section 118.

The OFDM signal demodulation section 111 performs OFDM demodulation of a received signal to which OFDMA is applied. The received signal subjected to OFDM demodulation is input in the broadcast channel/downlink control signal decoding section 112 and the ACK/NACK determining section 113. The broadcast channel/downlink control signal decoding section 112 decodes a signal transmitted by the broadcast channel and also decodes the downlink control channels (PDCCH, PCFICH, and PHICH). Based on the number of OFDM symbols acquired by decoding the PCFICH, a range of the number of OFDM symbols from the beginning of a subframe is subj ected to blind decoding, and the PDCCH is decoded from the group of CCEs addressed to that mobile station 10. As a result of decoding the PDCCH, the CAZAC number, resource mapping information, cyclic shift number, and block spreading code number assigned to this user are acquired.

The broadcast channel/downlink control signal decoding section 112 reports the number of OFDM symbols acquired by decoding the PCFICH, and the CCE index of the minimum number used for PDCCH transmission, to the CAZAC shift spreading code determining section 118.

The ACK/NACK determining section 113 decides whether or not there is an error with each packet constituting the received downlink data channel (PDSCH), and outputs the decision result as UL ACK/NACK. UL ACK/NACK may be referred to as "transmission acknowledgement information" and represented by a positive acknowledgement (ACK) that indicates there is no error or a negative acknowledgement (NACK) that indicates there is an error. Although UL ACK/NACK has only to represent the absence and presence of errors with received packets and one bit is sufficient to represent this, a greater number of bits may be used as well to represent this.

Here, resource allocation to UL ACK/NACK for the uplink PUCCH will be described with reference to FIG. 1(B). As illustrated in this drawing, in the frequency domain (horizontal axis), a CAZAC code is cyclically shifted to be orthogonal. #0 to #11 on the horizontal axis represent cyclic shift numbers. In this example, cyclic shift numbers are alternately assigned to ACK/NACK, but it is equally possible to set adequate intervals on a per cell basis. Also, in the time domain (vertical axis), orthogonality is established by a block spreading code. For example, a Walsh code that can spread four symbols can be used. Each user encodes and transmits UL ACK/NACK using one of resources #0 to #17. ACK/NACK resources #0 to #17 are represented by ACK indices.

This resource allocation to UL ACK/NACK is performed by the processing block 114 for ACK/NACK signals.

The processing block 114 for ACK/NACK signals has a CAZAC code generation section 121, a per-block modulation section 122, a subcarrier mapping section 123, an inverse fast Fourier transform (IFFT) section 124, a cyclic shift section 125, a block spreading section 126, and a cyclic prefix (CP) adding section 127.

The CAZAC shift spreading code determining section 118 determines the resource for UL ACK/NACK from the CCE index of the minimum number of the PDCCH and the number of OFDM symbols reported by the PCFICH. That is to say, from the CCE index of the minimum number of the PDCCH, the ACK index corresponding to the CCE index of the minimum number on a one-by-one basis is made a reference ACK index, and an index shift from the reference ACK index is applied according to the number of OFDM symbols reported by the PCFICH. The resource after the shift (the amount of CAZAC code cyclic shift in the frequency domain or the block spreading code number in the time domain) is determined as the resource for UL ACK/NACK.

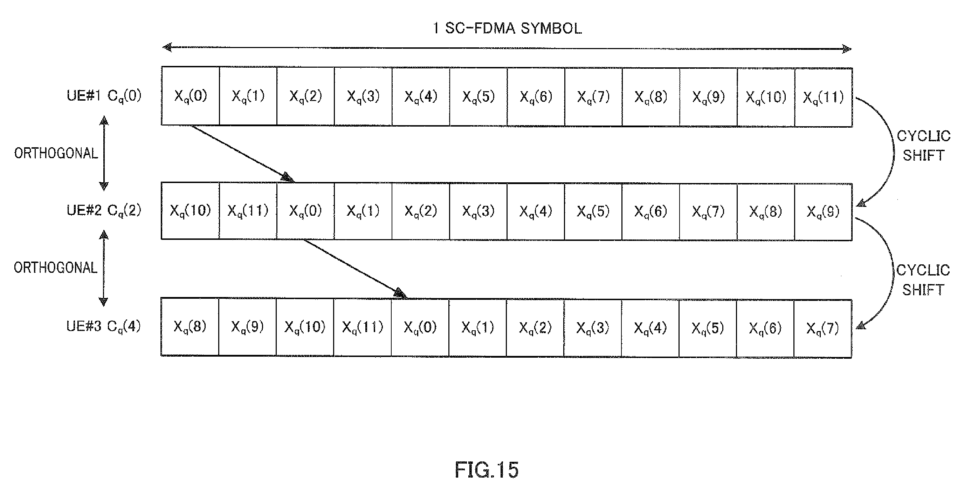

The CAZAC code generation section 121 generates a CAZAC code sequence according to the CAZAC number. The CAZAC number is the sequence number of a CAZAC code sequence designated by the base station 20, but, when the ACK/NACK resource is determined to be shifted in the CAZAC shift spreading code determining section 118, a CAZAC code sequence is generated according to the CAZAC number after the shift. In multiplexing of UL ACK/NACK between users, a different cyclic shift is applied to every user, in the same CAZAC sequence (the root sequence is the same), and multiplexing by CDMA is performed. As illustrated in FIG. 15, a CAZAC sequence having a sequence length of *M*=12 bits is defined as C_{q}(0) = (x_{q}(0), x_{q}(1) ··· x_{q}(11)), and the sequence acquired by cyclically shifting this sequence byLbits is defined as C_{q}(*L*) = (x_{q}(12-*L*), x_{q}(11-*L*) ··· x_{q}(11), x_{q}(0) ... x_{q}(*L*-1)). By assigning different amounts of cyclic shift to different users, CDM multiplexing is possible (utilizing the fact that the autocorrelation is 0).

The per-block modulation section 122 modulates the CAZAC code generated in the CAZAC code generation section 121 by UL ACK/NACK. A block (one OFDM symbol) is formed by multiplying all chips of the CAZAC code sequence assigned to individual users (the length of the sequence can be associated with one OFDM symbol) by factors (ACK bits or NACK bits), and an information sequence to be transmitted as UL ACK/NACK is derived. The CAZAC code sequence is an orthogonal code sequence assigned in the serving cell to distinguish between users, and, by cyclically shifting the CAZAC code sequence, a plurality of users can be multiplexed.

The subcarrier mapping section 123 performs a discrete Fourier transform on the CAZAC code modulated by UL ACK/NACK, and converts time sequence information into frequency domain information. UL ACK/NACK formed with a CAZAC code is designated by the base station 20 as resource mapping information, and mapped to subcarriers.

The inverse fast Fourier transform (IFFT) section 124 performs an inverse Fourier transform on signal in which UL ACK/NACK is mapped to subcarriers, and makes the frequency domain signal back to a time domain signal.

The cyclic shift section 125 cyclically shifts time domain UL ACK/NACK formed with the CAZAC code generated in the CAZAC code generation section 121, according to the cyclic shift number. If the code length of CAZAC code A is L, new code B is generated by moving a series of Δ samples including the sample at the end of CAZAC code A (the L-th sample) to the beginning of CAZAC code A. In this case, as for Δ=0 to (L-1), CAZAC codes A and B are orthogonal to each other. That is to say, one given CAZAC code and a code obtained by cyclically sifting that CAZAC code, are orthogonal to each other.

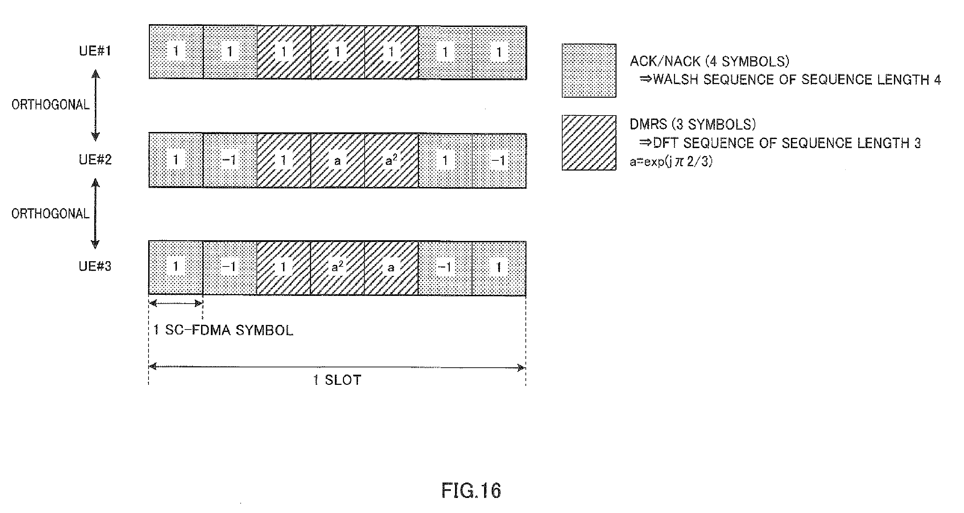

The block spreading section 126 multiplies UL ACK/NACK by user-specific block spreading codes. Code numbers to specify block spreading codes are provided from the base station 20 on a per user basis, but, when the ACK/NACK resource is determined to be shifted in the CAZAC shift spreading code determining section 118, a block spreading code corresponding to the resource after the shift is used. Here, as illustrated in FIG. 1(B), in LTE, one subframe of an uplink control channel is formed with two slots, and one slot is formed with seven SC - FDMA symbols. As illustrated in FIG. 16, in the PUCCH, four symbols of ACK/NACK are assigned in one slot, and, in the same slot, three symbols of a reference signal (DMRS) are assigned. The four symbols of UL ACK/NACK are multiplied by a Walsh sequence having a sequence length of 4 and spread, and the three symbols of a reference signal (DMRS) are multiplied by a DFT sequence having a sequence length of 3 and spread. By applying a Walsh sequence and DFT sequence that are orthogonal between users, ACK/NACK and reference signal (DMRS) are orthogonally multiplexed in the time axis direction.

The cyclic prefix (CP) adding section 127 adds a cyclic prefix (CP) to information to transmit. A cyclic prefix (CP) functions as a guard interval for cancelling the differences in multipath propagation delay and reception timing between a plurality of users in the base station

The uplink reference signal processing block 115 has a CAZAC code generation section 131, a subcarrier mapping section 132, an inverse fast Fourier transform (IFFT) section 133, a cyclic shift section 134, a block spreading section 135, and a cyclic prefix (CP) adding section 136.

The CAZAC code generation section 131 generates a CAZAC code sequence according to the CAZAC number, which is the sequence number of a CAZAC code sequence designated by the base station 20. The subcarrier mapping section 132 maps an uplink reference signal formed with the CAZAC code sequence, to the resource blocks designated by the base station 20. In the inverse fast Fourier transform (IFFT) section 133, the frequency domain uplink reference signal is subjected to an inverse Fourier transform and converted from a frequency domain signal back to a time domain signal. Next, a cyclic shift is applied in the cyclic shift section 134 according to the cyclic shift number designated by the base station 20, so that the uplink reference signal is orthogonal between users. Furthermore, the block spreading section 135 multiplies the uplink reference signal by user-specific block spreading codes and block spreading is performed in domains including the time domain. Code numbers to specify block spreading codes are provided from the base station 20 on a per user basis. Using a CAZAC code cyclic shift and the block spreading code together, a cyclic prefix is added to the user-multiplexed uplink reference signal in the cyclic prefix (CP) adding section 136.

The time multiplexing section 116 multiplexes UL ACK/NACK and the uplink reference signal in the time domain. Furthermore, a transmission symbol that is channel-multiplexed with the data channel in the multiplexing section 117 is transmitted to the transmission/reception section 103.

Next, the processing for detecting PCFICH errors in the base station 20 will be described.

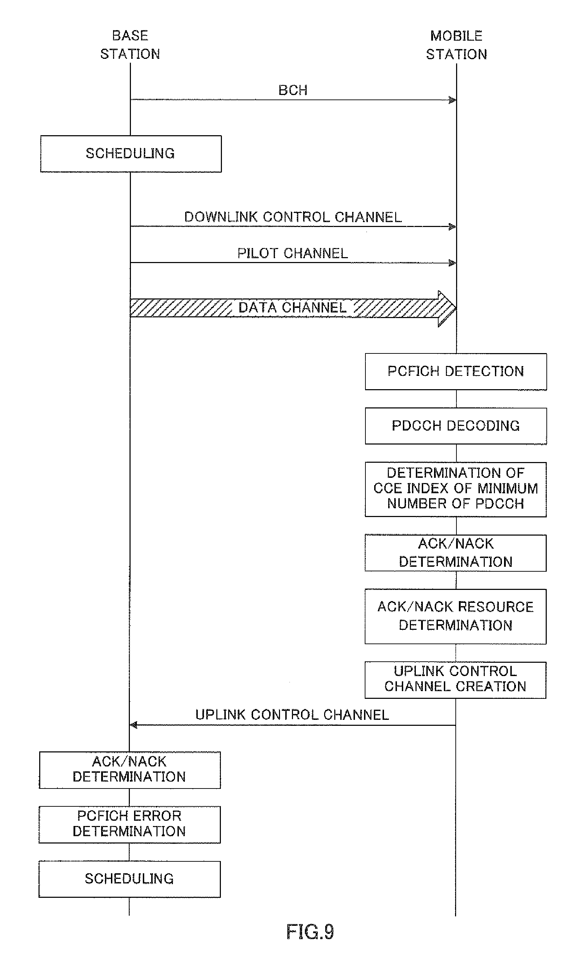

FIG. 9 illustrates a processing sequence related to PCFICH error detection.
The base station 20 transmits general code information related to all users in the cell by a broadcast channel (BCH). Each individual mobile station 10 uniquely derives code information that is specific to that mobile station, from broadcast information. General code information may indicate, for example, that N CAZAC code sequences (C #1, C #2, ... , C #N) are used in the cell and that there are M amounts of cyclic shift for each sequence. In the base station 20, downlink scheduling is performed, and radio resources are allocated to the downlink control channels (PDCCH, PCFICH and PHICH), the downlink data channel (PDSCH), and the pilot channel.

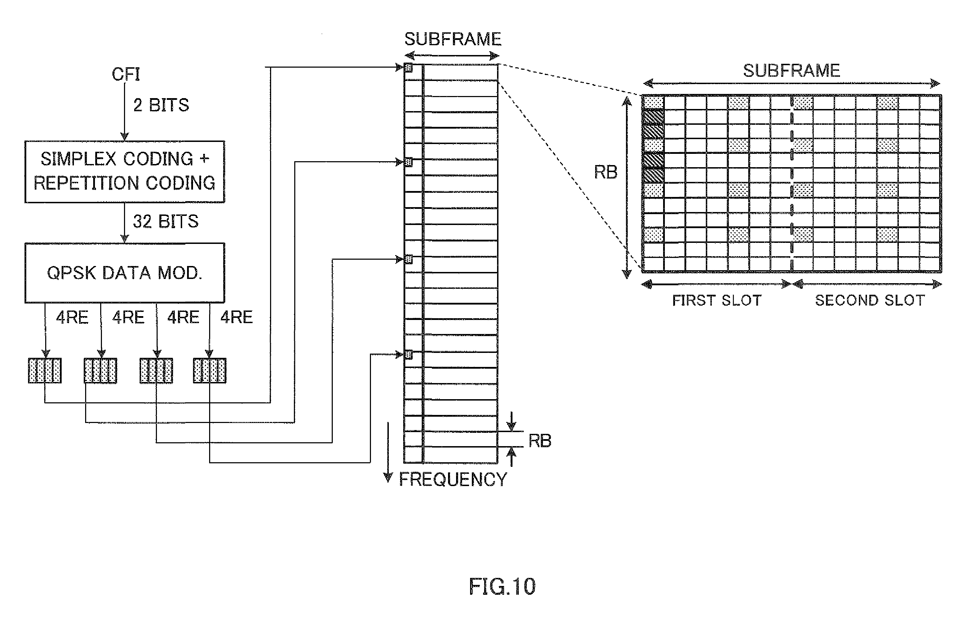

Here, the processing until the number of symbols transmitted by the PCFICH is assigned to subframes will be explained with reference to FIG. 10. As described above, the PCFICH reports the number of OFDM symbols to represent the field assigned to the PDCCH in one subframe, in the form of two-bit information (CFI value). The scheduler 220 selects an optimal CFI value according to the cell radius, the number of users accommodated and so on, and reports the selected optimal CFI value to the CFI generation section 2215. The CFI generation section 2215 converts the number of OFDM symbols, which represents the field assigned for the downlink control channels, designated by the scheduler 220 in subframe units, into a two-bit CFI value. The CFI coding · modulation section 2216 performs the following processing. That is to say, the two-bit CFI value is scrambled upon 32-bit encoded data by simplex coding and bit repetition. 16 QPSK symbols generated in this way are mapped to four REGs (Resource Element Groups). Four resource elements constitute one REG, and one resource element is formed with one subcarrierxone OFDM symbol. The REGs are arranged uniformly over the entire range of the system band, so as to expect a frequency diversity effect. That is, in one subframe, the time domain is formed with the first and second slots, and one slot is formed with seven OFDM symbols. Furthermore, the frequency domain is formed with twelve resource blocks (RBs), and one resource block is formed with twelve subcarriers (180 kHz). As illustrated in FIG. 10, in each subframe in which CFI information is mapped, the CFI information (fragment) is arranged in the beginning OFDM symbol of the first slot.

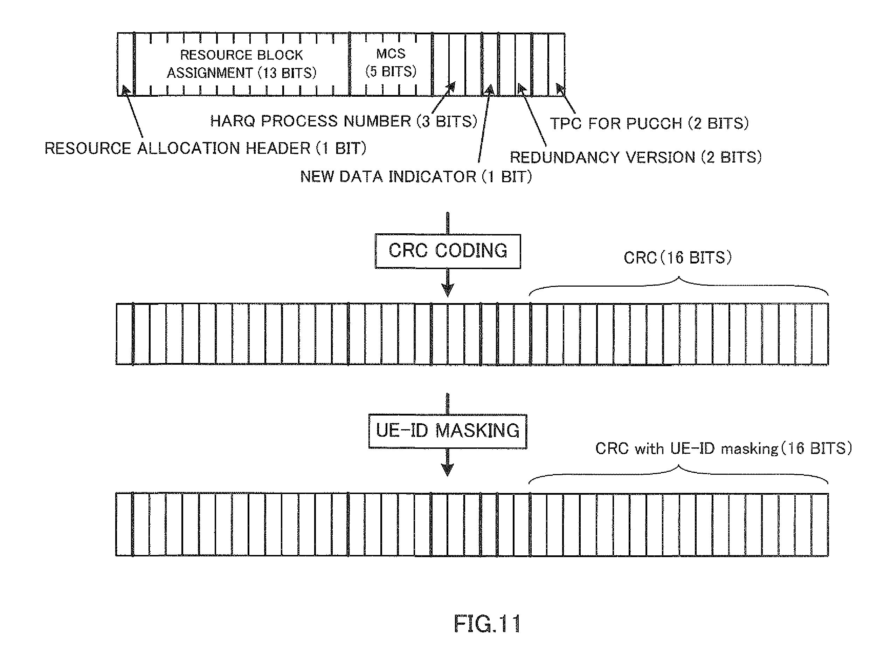

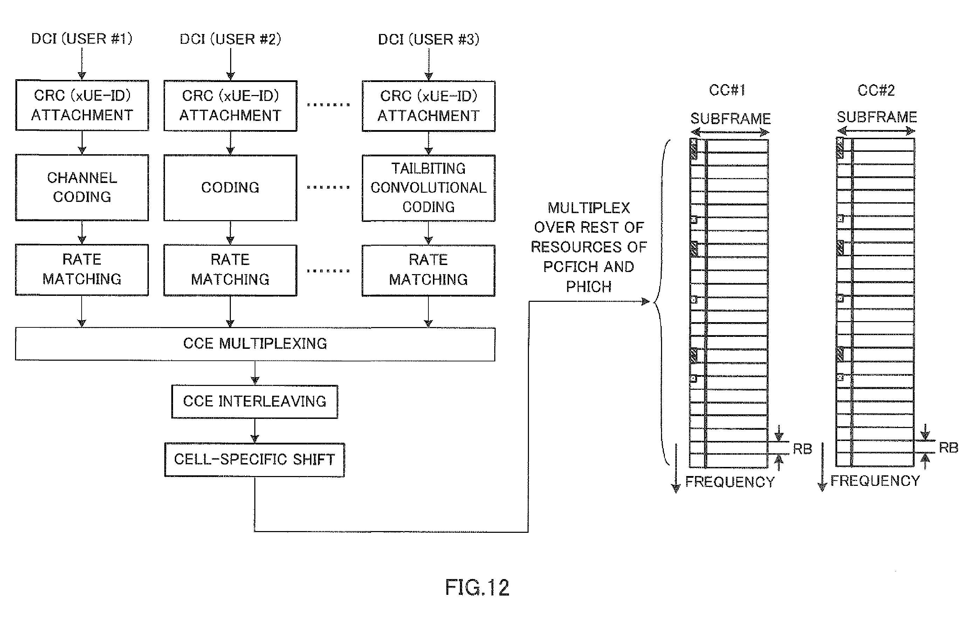

Next, processing until mapping resource allocation information will be described with reference to FIG. 11 and FIG. 12.
In the LTE system, information to transmit as downlink control signals can include control channel format information (CFI: Control channel Format Indicator), ACK/NACK information for the uplink shared channel (PUSCH) transmission data, and uplink/downlink shared channel resource allocation information (DCI: Downlink Control Information). DCI mainly includes radio resource allocation information but can also include control information about other things than radio resources, such as transmission power control commands. Consequently, DCI may be referred to as "downlink control information". Downlink control channel signals are transmitted by the PCFICH, PHICH and PDCCH. These control signals are reported by the beginning n OFDM symbols in the first slot, in each subframe, in a way to time-multiplex with the PDSCH. A subframe is the transmission time unit upon user data transmission.

As illustrated in FIG. 11, the DCI configuration defined by LTE has resource allocation information (resource block assignment) per terminal, the most efficient MCS information (Modulation and Coding Scheme) to satisfy the assigned resource block error rate, HARQ information (HARQ process number) to combine retransmission data with initially received data and decode this in order to correct errors with received data having occurred in the terminal side fast, identifier (NDI : New Data Indicator) to distinguish between new data and retransmission data, information (redundancy version) to show which part of redundancy is transmitted by HARQ, and PUCCH transmission power control command (TPC for PUCCH).

As illustrated in FIG. 12, a sixteen-bit CRC code is attached to a downlink control signal (DCI), and the CRC code is masked by a sixteen-bit user identifier (UE-ID). The DCI subjected to the masking processing is encoded by a code matching the coring rate, and rate matching is performed to make the PDCCH have a predetermined number of bits. As for PDCCHs for other users, DCI coding and rate matching are performed.

PDCCH transmission is performed in CCE units, which are blocks of radio resources and are each formed with 36 subcarriers. The scheduler 220 of the base station 20 controls the number of CCEs to allocate to users #1 to #N. After all PDCCHs are coupled in a serial way and multiplexed, interleaving is performed in CCE units. Furthermore, the result is scrambled by a cell-specific sequence and mapped to QPSK symbols. These are bundled every four symbols, and mapped to REGs in a predetermined order.

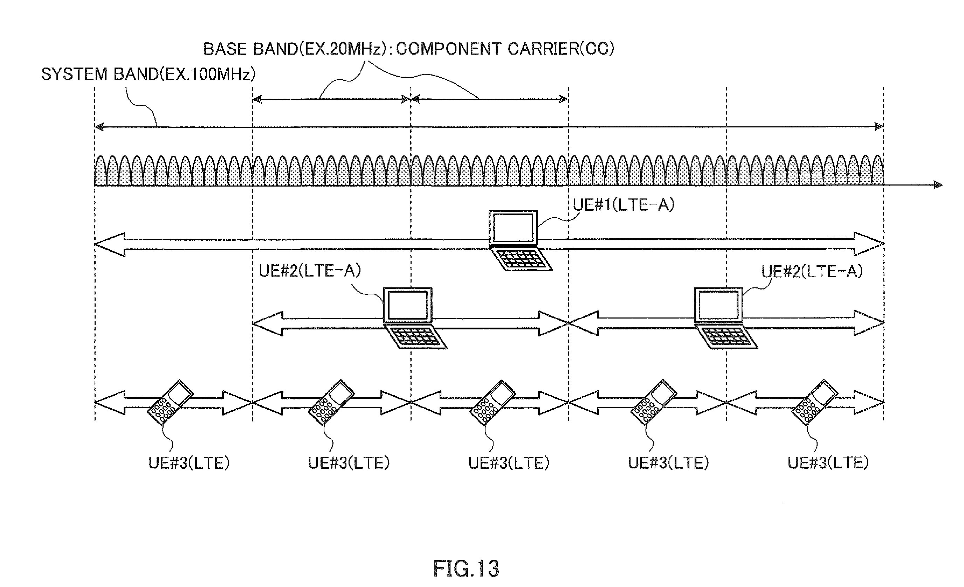

LTE-A has agreed to employ a layered bandwidth configuration. FIG. 13 is a drawing illustrating the layered bandwidth configuration defined in LTE-A. This is a layered bandwidth configuration in the event where an LTE-A system, which is the first mobile communication system having the first system band formed with a plurality of fundamental frequency blocks, and an LTE system, which is a second mobile communication system having a second system band formed with one fundamental frequency block, are both present. In the LTE-A system, for example, radio communication is performed in a variable system bandwidth of 100 MHz or lower, and, in the LTE system, radio communication is performed in a variable system bandwidth of 20 MHz or lower. The system band for the LTE-A system is at least one fundamental frequency block, where the system band of the LTE system is one unit. In LTE-A, a fundamental frequency block is referred to as a "component carrier." Aggregating a plurality of fundamental frequency blocks into a wide band in this way is referred to as "carrier aggregation.

In FIG. 13, the system band of the LTE-A system is a system band to include bands of five component carriers (20 MHz×5=100 MHz), where the system band (base band: 20 MHz) of the LTE system is one component carrier. In FIG. 1, mobile station UE (User Equipment) #1 is a mobile station to support the LTE-A system (and also supports the LTE system) and can support a system band up to 100 MHz. UE #2 is a mobile station to support the LTE-A system (and also supports the LTE system) and can support a system band up to 40 MHz (20 MHz×2=40 MHz). UE #3 is a mobile station to support the LTE system (and also supports the LTE-A system) and can support a system band up to 20 MHz (base band).

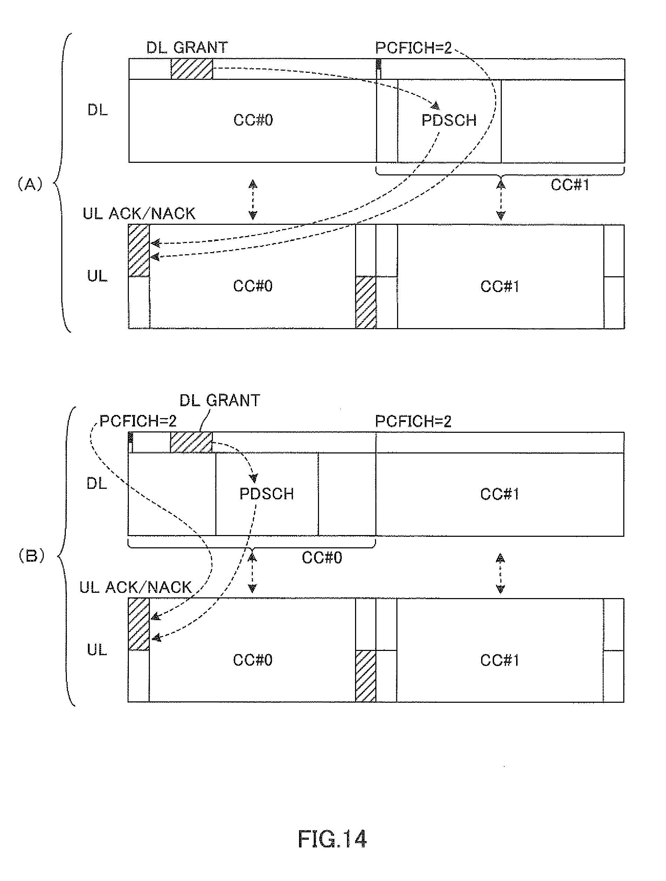

In radio communication in a system band widened in this way, for the method of transmitting a downlink control channel to report information necessary for traffic channels (PDSCH reception and PUSCH transmission), the two methods illustrated in FIGs. 14(A) and (B) are possible.

With the method illustrated in FIG. 14 (A), a PDSCH and its PDCCH are transmitted by different component carriers. To be more specific, a PDCCH to transmit downlink assignment information (DL grant) for the PDSCH assigned to component carrier CC #1, is assigned to CC #0, which is a different component carrier. In this way, if a PDCCH to transmit downlink assignment information (DL grant) for a PDSCH can be transmitted by a different component carrier, even if the quality of a downlink control channel deteriorates significantly in specific component carrier CC #1, it is still possible to transmit the downlink control channel by utilizing another component carrier CC #0 of good communication quality, and prevent deterioration of communication quality. The method illustrated in FIG. 14(B) is a scheme set forth by LTE, whereby a PDSCH and its PDCCH are transmitted by the same component carrier.

The mobile station 10 receives a downlink control channel and pilot channel scheduled as described above, and furthermore receives a data channel that is time-multiplexed over the downlink control channel. The broadcast channel/downlink control signal decoding section 112 decodes the PCFICH from the beginning symbol of each subframe. The PDCCH is blind-decoded from the search space specified by the number of OFDM symbols (CFI value) reported by the PCFICH, and the CCE addressed to this mobile station 10 is detected. By decoding the PDSCH, which is a data channel, according to the downlink control information acquired by decoding the PDCCH addressed to this mobile station 10, downlink user data is acquired. Furthermore, from the CCEs used to transmit the PDCCH addressed to this mobile station 10, the CCE index of the minimum number is identified. The CCE index of the minimum number and the number of OFDM symbols (CFI value) reported by the PCFICH are reported to the CAZAC shift spreading code determining section 118. The ACK/NACK determining section 113 determines whether or not there is an error with each packet constituting the downlink data channel (PDSCH), and outputs the decision result as UL ACK/NACK.

The CAZAC shift spreading code determining section 118 gives the UL ACK/NACK output from the ACK/NACK determining section 113, to the per-block modulation section 122. Furthermore, the resource for ACK/NACK is determined from the CCE index of the minimum number and the number of OFDM symbols (CFI value) reported by the PCFICH, and the amount of index shift is determined from the ACK index corresponding to the CCE index of the minimum number on a one-by-one basis. As for the method of determining the amount of index shift, the simple shift method illustrated in FIG. 2 (A) or the cyclic shift method illustrated in FIG. 2(B) is applicable. In the CAZAC code generation section 121, a CAZAC code sequence is generated according to a shifted CAZAC number, and, in the block spreading section 126, a shifted block spreading code is multiplied upon UL ACK/NACK and orthogonalized in the time domain.

In this way, the resource for ULACK/NACK is shifted according to the value of a PCFICH (CFI value) received in the mobile station 10, time-multiplexed with an uplink reference signal, and furthermore multiplexed with another uplink control channel, and an uplink control channel generated in this way is transmitted to the base station 20.

The base station 20 receives the uplink control channel and demodulates UL ACK/NACK included in the uplink control channel in the ACK/NACK demodulation section 21. When this takes place, the resources (CAZAC code and block spreading code) of the demodulated UL ACK/NACK are reported to the scheduler 220.

The scheduler 220 judges whether or not the PCFICH is received correctly in the mobile station 10 from the shift of the UL ACK/NACK resources received on the uplink. The base station 20 knows the CCE index of the minimum number assigned to each user's downlink. PDCCH and the number of OFDM symbols (CFI value) reported by the PCFICH, so that, as long as the received UL ACK/NACK resource is shifted so as to correspond to the number of OFDM symbols reported by the PCFICH, it is possible to judge that the PCFICH is received correctly. When there is no error with the PCFICH, a value to identify retransmission data is set in the NDI (FIG. 11) included in retransmission data for this user.

On the other hand, when it is decided that there is an error with the PCFICH received in the mobile station 10, a value to identify new data is set in the NDI (FIG. 11) included in retransmission data for this user. User data based on a wrong PCFICH is held in the mobile station 10, and therefore combining with retransmission data is likely to result in an error again. So, by toggling the NDI included in retransmission data, the mobile station 10 having received a retransmission packet can identify new data and discard the user data based on a wrong PCFICH.

Although the present invention shifts UL ACK/NACK resource according to the value of a received PCFICH in order to detect PCFICH errors in the base station 20, the shift of UL ACK/NACK resource is by no means limiting, as long as the value of the PCFICH can be reported to the base station 20 by utilizing UL ACK/NACK.

According to another aspect of the present invention, the value of the PCFICH is reported to the base station 20 by changing the modulation of UL ACK/NACK according to the value of the PCFICH detected in mobile station UE. Based on the method of the modulation of UL ACK/NACK received in base station eNB, it is judged whether or not there is an error with the PCFICH detected in mobile station UE. For example, a rotation corresponding to the value of the PCFICH detected in mobile station UE may be applied to an uplink reference signal subject to QPSK modulation.

In this way, by changing the modulation of UL ACK/NACK according to the value of the PCFICH detected in the mobile station 10, it is possible to report the value of the PCFICH to the base station 20 even if the number of CCEs used for PDCCH transmission is one.

The present invention is by no means limited to the above-described embodiments and can be implemented in various modifications within the scope of the spirit of the present invention.

### Industrial Applicability

The present invention is applicable to PCFICH error detection in an LTE/LTE-A system.

The disclosure of Japanese Patent Application No. 2009-231936, filed on October 5, 2009, including the specification, drawings and abstract, is incorporated herein by reference in its entirety.

## Claims

1. A mobile terminal apparatus comprising:
a reception section configured to receive a number of symbols of a downlink control channel, a signal of the downlink control channel, and a signal of a downlink data channel, which are transmitted from a base station apparatus in predetermined time units;
a transmission acknowledgement section configured to generate transmission acknowledgement information which represents absence or presence of a reception error when the signal of the downlink data channel is decoded based on the signal of the downlink control channel;
a processing section configured to apply, to the transmission acknowledgement information, processing which allows information related to the number of symbols of the downlink control channel received in the reception section to be detected from the transmission acknowledgement information in the base station apparatus; and
a transmission section configured to transmit the transmission acknowledgement information processed by the processing section.

2. The mobile terminal apparatus according to claim 1, wherein the processing section is configured to shift a resource to allocate to the transmission acknowledgement information in the uplink control channel according to the number of symbols of the downlink control channel received in the reception section.

3. The mobile terminal apparatus according to claim 1, wherein the processing section is configured to cyclically shift the resource to allocate to the transmission acknowledgement information in the uplink control channel according to the number of symbols of the downlink control channel received in the reception section.

4. The mobile terminal apparatus according to claim 2, wherein:
the downlink control channel is transmitted by one or a plurality of signal transmission blocks, using a signal transmission block being a block of radio resources as one unit; and
the processing section is configured to shift the resource for the transmission acknowledgement information when the number of signal transmission blocks used to transmit the downlink control channel is two or greater.

5. The mobile terminal apparatus according to claim 1, wherein the processing section is configured to change modulation of the transmission acknowledgement information in the uplink control channel according to the number of symbols of the downlink control channel received in the reception section.

6. A base station apparatus comprising:
a transmission section configured to transmit a number of symbols of a downlink control channel, a signal of the downlink control channel, and a signal of a downlink data channel, in predetermined time units;
a reception section configured to receive transmission acknowledgement information which represents absence or presence of a reception error, the transmission acknowledgement being transmitted from a mobile terminal apparatus which has decoded the signal of the downlink data channel based on the signal of the downlink control channel; and
an error determining section configured to determine absence or presence of an error with respect to the number of symbols of the downlink control channel received in the mobile terminal apparatus, from processing applied to the transmission acknowledgement information received in the reception section.

7. The base station apparatus according to claim 6, wherein the error determining section is configured to detect an error with respect to the number of symbols of the downlink control channel, from an amount of shift of a resource allocated to the transmission acknowledgement information upon reception of the transmission acknowledgement information in the reception section.

8. The base station apparatus according to claim 6, wherein the error determining section is configured to detect an error with respect to the number of symbols of the downlink control channel, from modulation method applied to the transmission acknowledgement information upon reception of the transmission acknowledgement information in the reception section.

9. The base station apparatus according to claim 6, wherein, when an error is detected with respect to the number of symbols of the downlink control channel, data for which a retransmission is requested by the transmission acknowledgement information is transmitted as new data.

10. A radio communication control method comprising:
receiving a number of symbols of a downlink control channel, a signal of the downlink control channel, and a signal of a downlink data channel, which are transmitted from a base station apparatus in predetermined time units;
generating transmission acknowledgement information which represents absence or presence of a reception error when the signal of the downlink data channel is decoded based on the signal of the downlink control channel;
applying processing which allows information related to the received number of symbols of the downlink control channel to be detected from the transmission acknowledgement information in the base station apparatus; and
transmitting the processed transmission acknowledgement information.

11. A radio communication control method comprising:
transmitting a number of symbols of a downlink control channel, a signal of the downlink control channel, and a signal of a downlink data channel, in predetermined time units;
receiving transmission acknowledgement information which represents absence or presence of a reception error, transmitted from a mobile terminal apparatus having received the signal of the downlink data channel based on the signal of the downlink control channel; and
determining absence or presence of an error with respect to the number of symbols of the downlink control channel received in the mobile terminal apparatus, from processing applied to the received transmission acknowledgement information.
